(19) Europäisches Patentamt / European Patent Office / Office européen des brevets

(11) **EP 4 773 599 A1**

(12) **EUROPEAN PATENT APPLICATION**

(43) Date of publication:
08.07.2026 Bulletin 2026/28

(21) Application number: 25305010.8

(22) Date of filing: 06.01.2025

(51) International Patent Classification (IPC):
*H04N 19/105* (2014.01)   *H04N 19/11* (2014.01)
*H04N 19/176* (2014.01)   *H04N 19/593* (2014.01)
*H04N 19/70* (2014.01)

(52) Cooperative Patent Classification (CPC):
H04N 19/11; H04N 19/105; H04N 19/176;
H04N 19/593; H04N 19/70

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(72) Inventors:
• RATH, Gagan Bihari
  35000 RENNES (FR)
• POIRIER, Tangi
  35235 THORIGNE-FOUILLARD (FR)
• ROBERT, Antoine
  35140 MEZIERES SUR COUESNON (FR)
• RADOSAVLJEVIC, Milos
  35000 RENNES (FR)

(71) Applicant: InterDigital CE Patent Holdings, SAS
75017 Paris (FR)

(74) Representative: Interdigital
Immeuble ZEN 2
845 A, avenue des Champs Blancs
35510 Cesson-Sévigné (FR)

(54) **ENCODING AND DECODING METHODS WITH PERSPECTIVE INTRA PREDICTION**

(57) A first indicator indicating that a prediction mode of a current block belongs to a list of most probable modes is decoded. A second indicator is then obtained that indicates that perspective prediction is to be applied to the current block. An index is also obtained that identifies a prediction mode in a list of most probable perspective modes derived from the list of most probable modes. The current block is reconstructed based on the prediction mode.

FIG. 12A

**Description**

**BACKGROUND**

The present application is related to methods and apparatuses for picture encoding and decoding using perspective intra prediction.

**BRIEF SUMMARY**

Briefly stated, in one embodiment a decoding method is presented. A first indicator is decoded that indicates that a prediction mode of a current block belongs to a list of most probable modes. A second indicator is then obtained that indicates that perspective prediction is to be applied to the current block. An index is also obtained that identifies a prediction mode in a list of most probable perspective modes derived from the list of most probable modes. The current block is reconstructed based on the prediction mode.

In another embodiment, a decoding apparatus comprising one or more processors and at least one memory coupled to said one or more processors is disclosed. The one or more processors are configured to perform decoding a first indicator indicating that a prediction mode of a current block belongs to a list of most probable modes; obtaining a second indicator indicating that perspective prediction is to be applied to the current block and an index identifying a prediction mode in a list of most probable perspective modes derived from the list of most probable modes; and reconstructing the current block based on the prediction mode.

In another embodiment, an encoding method is presented. A first indicator is encoded that indicates that a prediction mode of a current block belongs to a list of most probable modes. A second indicator is encoded that indicates that perspective prediction is to be applied to the current block. An index is also encoded that identifies a prediction mode in a list of most probable perspective modes derived from the list of most probable modes. The current block is encoded based on the prediction mode.

In another embodiment, an encoding apparatus comprising one or more processors and at least one memory coupled to said one or more processors is disclosed. The one or more processors are configured to perform encoding a first indicator indicating that a prediction mode of a current block belongs to a list of most probable modes; encoding a second indicator indicating that perspective prediction is to be applied to the current block and an index identifying a prediction mode in a list of most probable perspective modes derived from the list of most probable modes; and encoding the current block based on the prediction mode.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates depicts the directional intra modes defined in Versatile Video Coding (VVC) and Enhanced Coding Model (ECM);
FIG. 5 illustrates an example of perspective prediction of a target block in intra prediction;
FIG. 6 illustrates an example of defining a perspective point;
FIG. 7 illustrates examples of perspective points for a square block;
FIG. 8 illustrates an example of intra prediction of a target block using a perspective point;
FIG. 9 illustrates an example of derivation of a predictor of the target pixel ;
FIG. 10 depicts above and left coding unit (CU) locations for deriving a MPM list in VVC for different target block shapes;
FIG. 11 depicts five adjacent coding unit (CU) locations for deriving a MPM list in ECM;
FIGs 12A-12D are block diagrams illustrating a decoding method according to various embodiments; and
FIGs 13A-13D are block diagrams illustrating an encoding method according to various embodiments.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

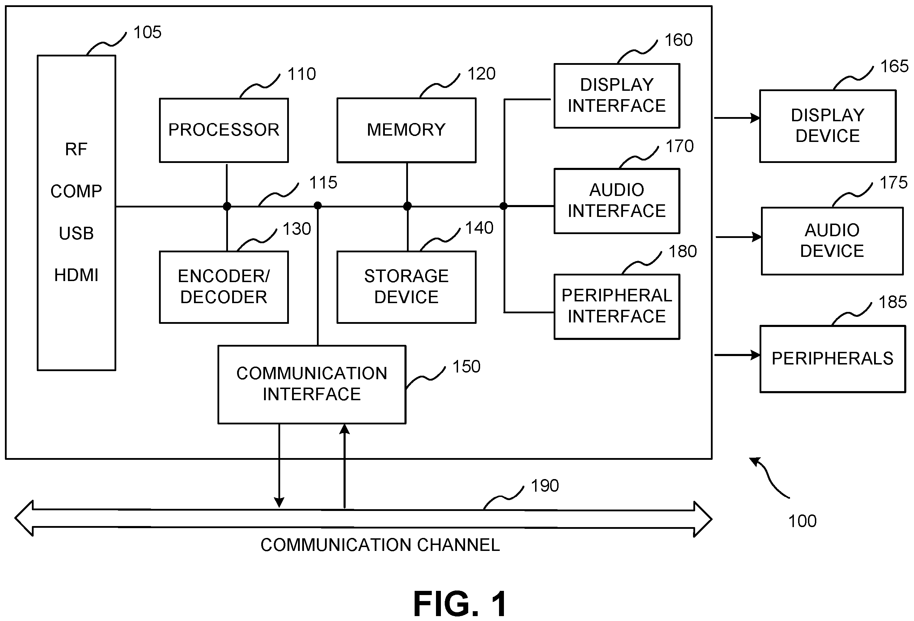

Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

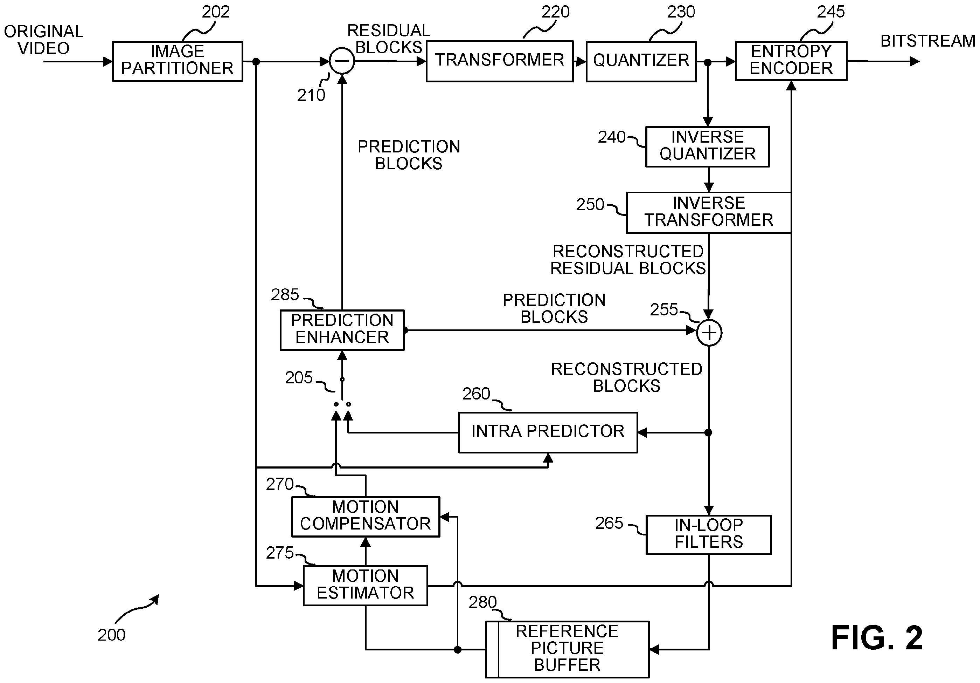

**FIG. 2** is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

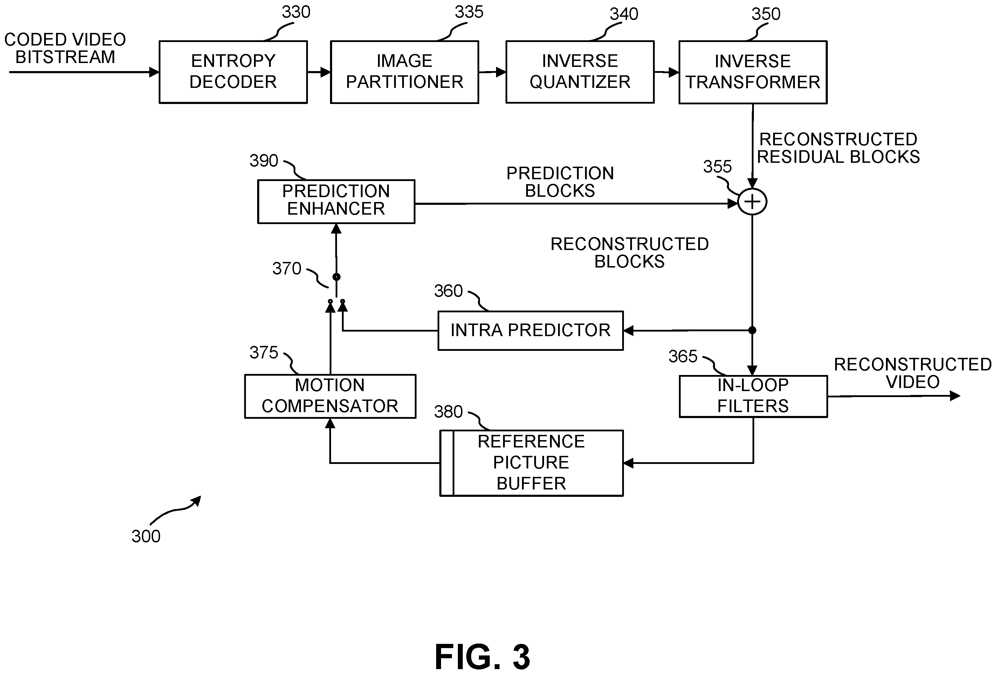

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode (e.g., directional intra mode) performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

**FIG. 3** is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

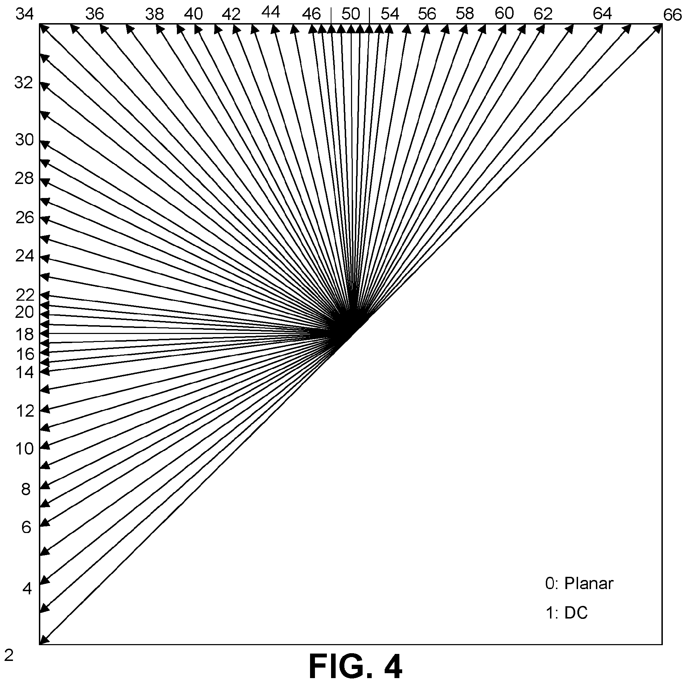

In order to capture the arbitrary edge directions present in natural video, the number of directional intra modes in VVC and ECM is extended from 33, as used in High Efficiency Video Coding (HEVC), to 65, as depicted in **FIG. 4,** and the PLANAR and DC modes remain the same. These denser directional intra prediction modes apply for all block sizes and for both luma and chroma intra predictions. The prediction modes 2-66 correspond to angular intra prediction directions that are defined from 45 degrees to -135 degrees in clockwise direction.

An objective of intra prediction with perspectives is to have a more efficient prediction for blocks in regions in the frame having perspectives. Because, otherwise, in those regions, a normal unidirectional prediction would result in smaller blocks, or the encoder would employ blending with multiple predictions. Since the regions with perspectives are normally spread over some blocks, prediction modes of neighboring blocks can be in perspective as well.

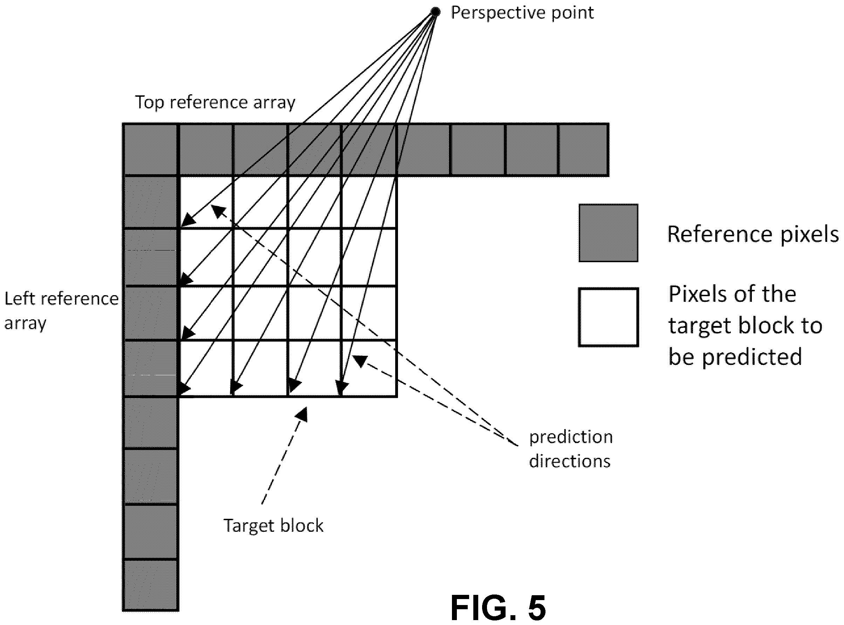

**FIG. 5** illustrates an example of perspective prediction of a target block (e.g., a coding unit) in intra prediction. Target pixels (i.e., pixels of the target block) in a row or column may have different prediction directions. As shown in FIG. 5, the perspective point may be on top of the block. Perspective modes may be used for intra prediction where predictions are performed using perspective points. Perspective mode (PM) and Perspective point (PP) may be enabled, used, and/or provided. A perspective mode (PM) may be considered as an angular mode with perspective prediction. The prediction may be made using a perspective point (PP) (e.g., vanishing point), which may be located along the direction associated with an angular mode (e.g., the angular mode associated with the target block) at a specified distance from a target block (e.g., as shown in FIG. 5).

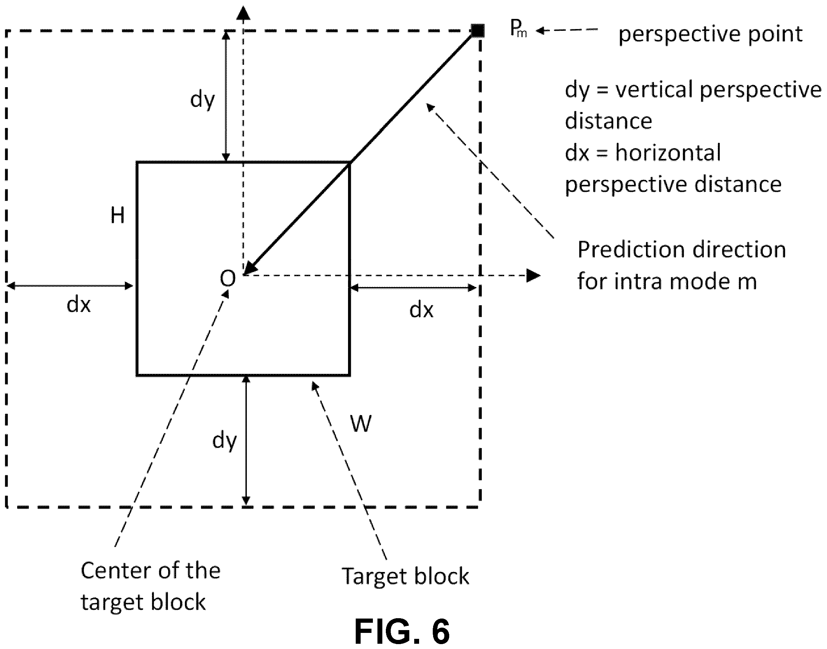

**FIG. 6** illustrates an example of defining a perspective point $P_m$. For a given prediction mode m, e.g., an angular mode, the perspective point (PP) may be defined as the intersection point of a prediction direction (e.g., prediction direction associated with the prediction mode m) at a particular point (e.g., at the center) of the target block with a line parallel to the side of the block at an offset distance. The prediction direction may be considered as a line oriented in the direction specified by the prediction mode m (e.g., by the corresponding angle parameter). For vertical prediction modes (e.g., vertical angular modes), the line may be horizontal at offset distance dy, and for horizontal prediction modes (e.g., horizontal angular modes), the line may be vertical at offset distance dx (e.g., as shown in the FIG. 6). The offset distances dx and dy of the line from the target block may be defined as vertical and horizontal perspective distances. H and W may denote the height and width of the target block.

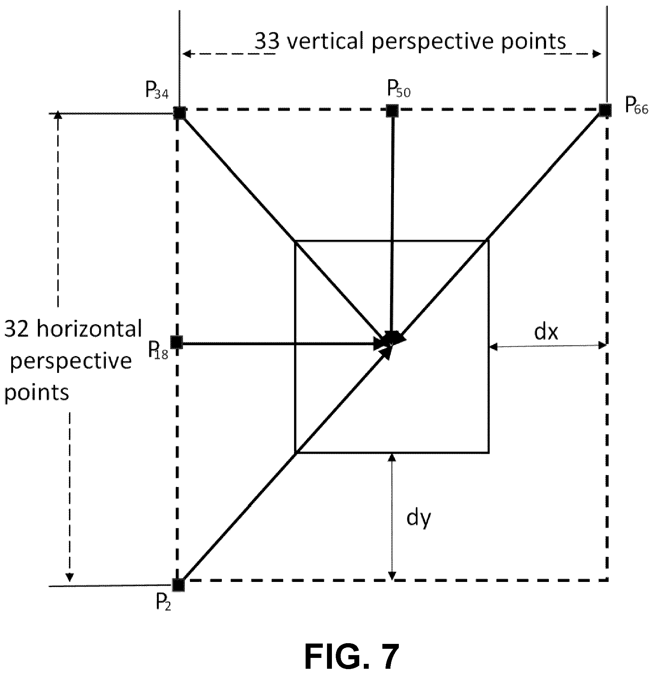

The applicable prediction directions may span the range from 45 degrees to -135 degrees (e.g., for a square target block). As shown in **FIG. 7,** there may be a perspective point defined (e.g., uniquely defined) that may correspond to a (e.g., each) prediction mode (e.g., for each angular mode). FIG. 7 illustrates an example of perspective points for a square target block. For a vertical angular mode, the corresponding perspective prediction is vertical, and similarly for a horizontal prediction the corresponding perspective prediction is horizontal. The PPs associated with vertical modes may be referred to as vertical PPs and PPs associated with horizontal modes may be referred to as horizontal PPs. For example, associated with 33 vertical modes, there may be 33 vertical PPs. For example, associated with 32 horizontal modes, there may be 32 horizontal PPs. The PPs may lie on a square, for example, if dx and dy are equal (e.g., chosen to be equal), as shown in FIG. 7 by a dotted square.

A vertical perspective point can be on top or below the target block. Similarly, a horizontal perspective point can be on the left or right of the target block. The vertical perspective points below a target block can be localized by extending the vertical prediction directions towards the bottom; similarly, the horizontal perspective points on the right of a target block can be localized by extending the horizontal prediction directions towards the right. Since the perspective points defined as above are associated with directional prediction modes, a directional prediction can be either in normal mode as in VVC, ECM, etc., or in perspective mode.

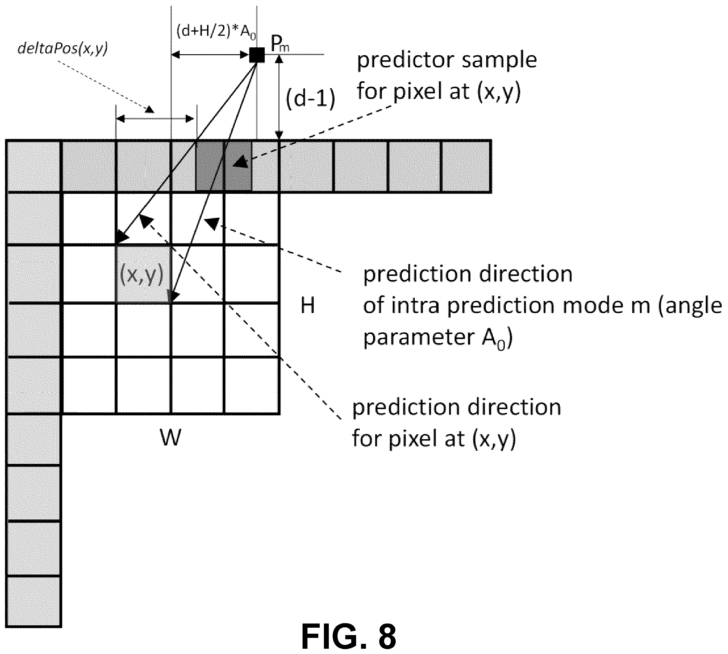

FIG. 8 illustrates an example of intra prediction of a target block using a perspective point. The perspective point is localized along a prediction direction at an offset distance from the target block. The prediction direction is the one associated with the intra prediction mode m (e.g., angular mode) associated with the target block and corresponds to an angle parameter $A_0$. For vertical prediction modes, the vertical offset distance can be denoted by dy, and for horizontal modes, the horizontal offset distance can be denoted by dx. dx and dy are called the horizontal and vertical perspective distances, respectively. For a vertical angular mode, the corresponding perspective prediction is vertical, and similarly for a horizontal prediction the corresponding perspective prediction is horizontal. The primary difference between the normal prediction and the prediction with perspective is that the prediction direction along a row or a column is variable in the latter case. So, the angular parameter (e.g., predIntraAngle) may be a function of the location of the target pixel. To distinguish between the two prediction types, the term perspectiveAngle may refer to the original predIntraAngle and predIntraAngleArray(x,y) may refer to the angle parameter at the pixel position (x,y).

FIG. 8 further illustrates the derivation of the angle parameter for the target pixel at position (x,y). For illustration sake, FIG. 8 illustrates a vertical prediction mode with a perspective point above the block. The case may be analogous for a horizontal prediction mode, e.g. if/when the perspective point is on the left of the block. Indeed, in this latter case, the prediction may be obtained in the same manner as vertical prediction mode by simply swapping the top and left reference arrays of the target block and transposing the obtained prediction.

The width and height of the target block may be denoted as W and H respectively. The perspective height d may be the vertical distance of the perspective point from the top edge of the target block. To avoid division operations, d may be assumed to be a power of 2. For example, $d = k * H$ may be used, where $k = 2^n$, $n = 0, 1, .. Kmax$, where *Kmax* is a preset integer. For a horizontal mode, $d = k * W$ may be used, where $k = 2^n$, $n = 0, 1,.. Kmax$.

For the sake of derivation, (1/32) pixel resolution of prediction angles may be used, but the same may be obtained for (1/64) pixel resolution. A(x,y) may denote the predIntraAngleArray(x,y) value at $(x, y)$ and $A_o$ may denote the angle parameter (e.g. perspectiveAngle) associated with the prediction mode (i.e., angular mode) of the target block (e.g., of the parent CU in case of ISP).

The angle parameter at target pixel $(x, y)$ may be computed as

$$A(x, y) = A(x, 0) * (d/ (d + y)),$$

where $A(x, 0)$ denotes the angle parameter in the first row but in the same column as the target pixel.

$A(x, 0)$ may be computed as

$$A(x, 0) = \left( \left( \left( \frac{W}{2} - x \right) \ll s \right) + \left( d + \frac{H}{2} \right) * A_o \right) / d,$$

where s is equal to 5 or 6 depending on if the sample resolution of prediction direction is (1/32) or (1/64) of a pixel, respectively.

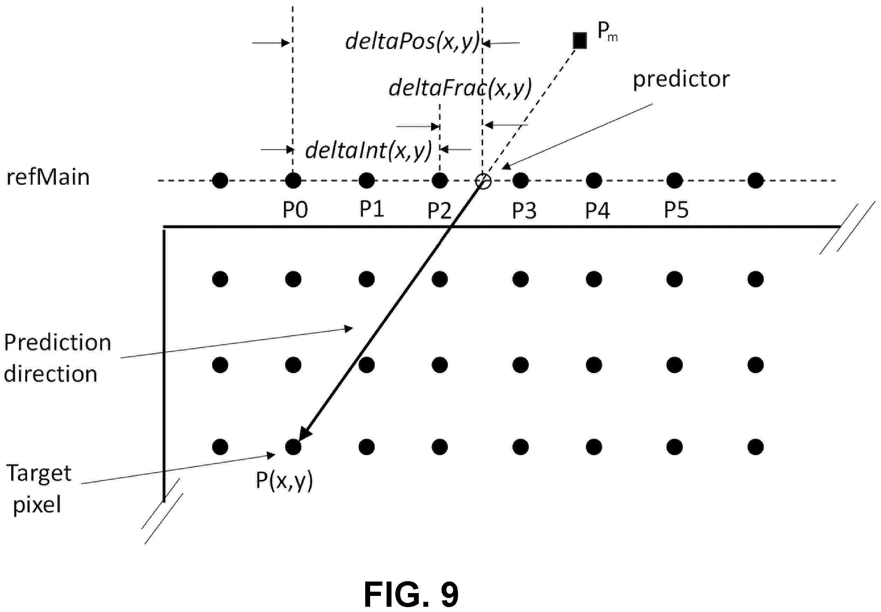

FIG. 9 illustrates an example of derivation of a predictor (e.g. predictor sample) of the target pixel. Once the predIntraAngleArray(x,y) has been computed for a target pixel located at (x,y), a predictor sample is identified. The predictor (e.g. predictor sample) for a target pixel may be the reference sample lying in the direction joining the target pixel with the perspective point. For example, deltaPos(x,y) may denote the x-offset of the predictor from the target pixel at (x,y). For example, deltaInt(x,y) and deltaFrac(x,y) may denote the integral and fractional part of deltaPos(x,y). deltaPos(x,y), deltaInt(x,y) and deltaFrac(x,y) may be determined according to Eqs. 1-3:

$$deltaPos(x,y) = (1 + y) * A(x,y) \qquad \text{(Eq. 1)}$$

$$deltaInt(x,y) = deltaPos(x,y) \gg 5 \qquad \text{(Eq. 2)}$$

$$deltaFrac(x,y) = deltaPos(x,y) \,\&\, 31 \qquad \text{(Eq. 3)}$$

where, for example, (1/32) pixel resolution may be used for the intra prediction angle. In the case of (1/64) pixel resolution for intra prediction angle, the integral and fractional parts of the offset may be obtained according to Eqs. 4-5:

$$deltaInt(x,y) = deltaPos(x,y) \gg 6 \qquad \text{(Eq. 4)}$$

$$deltaFrac(x,y) = deltaPos(x,y) \,\&\, 63 \qquad \text{(Eq. 5)}$$

As shown in FIG. 9, the predictor for a target pixel may be interpolated with 6 nearest reference samples. Alternatively, it may be interpolated with 4 nearest reference samples or linearly interpolated using (e.g., only) the two nearest reference samples.

The predictor sample may be interpolated using the six nearest reference samples. Referring to FIG. 9, the six reference samples may be identified in accordance with Table 2.

**Table**

| |
|---|
| P0 = reMain[deltaInt(x,y) + x - 1] |
| P1 = reMain[deltaInt(x,y) + x] |
| P2 = reMain[deltaInt(x,y) + x + 1] |
| P3 = reMain[deltaInt(x,y) + x + 2] |
| P4 = reMain[deltaInt(x,y) + x + 3] |
| P5 = reMain[deltaInt(x,y) + x + 4] |

where, for example, refMain may be the main reference array pointing to the top-left corner pixel. The interpolation filter may be determined from the value of deltaFrac(x,y). If f(n) denotes the filter coefficients, the predictor sample *P(x,y)* may be interpolated according to Eq. 6.

$$P(x,y) = (f(0) *P0 + f(1) * P1 + f(2)*P2 + f(3)*P3 + f(4)*P4 + f(5)*P5 + 128) \gg 8 \text{ (Eq. 6)}$$

In examples, deltaFrac may be used (e.g., only deltaFrac may be used) to determine the filter (e.g., which may remain constant for a given row of pixels). The filter may change from pixel to pixel, for example, even on the same row depending on the value of deltaFrac(x,y). The filter for a given target block may be either a smoothing filter or a cubic filter, for example, depending on an indication (e.g., a flag called interpolationFlag). The same criterion may be maintained here.

In examples, the four nearest reference samples (e.g., P1, P2, P3, and P4) may be utilized for interpolating the predictor sample. Alternatively, the predictor may be linearly interpolated using the two nearest samples (e.g., only the two nearest reference samples) P2 and P3.

In VVC and ECM, intra prediction is applied to all-Intra frames as well as to intra blocks in Inter frames, where a target block, e.g., a coding unit (CU), is spatially predicted from the causal neighbor blocks in the same frame, e.g., the blocks on the top and top-right, the blocks on the left and left-bottom, and the top-left block. Based on the decoded pixel values in these blocks, the encoder constructs different predictions for the target block and chooses the one that leads to the best rate-distortion (RD) performance. In VVC, the predictions are tested for the 67 prediction modes illustrated on FIG.

4, which include one PLANAR mode (indexed as mode 0), one DC mode (indexed as mode 1), and remaining 65 angular modes, which may contain several wide angular modes if the current block is rectangular. In ECM, the encoder, in addition, checks for predictions with additional prediction modes, e.g., MIP (Matrix Intra Prediction), DIMD (Decoder side intra mode derivation), TIMD (Template-based Intra Mode Derivation), SGPM (Spatial Geometric Partitioning Mode), IntraTmp (Template-based Intra Prediction), etc., besides the 67 prediction modes to obtain a (e.g., best) prediction for a target block.

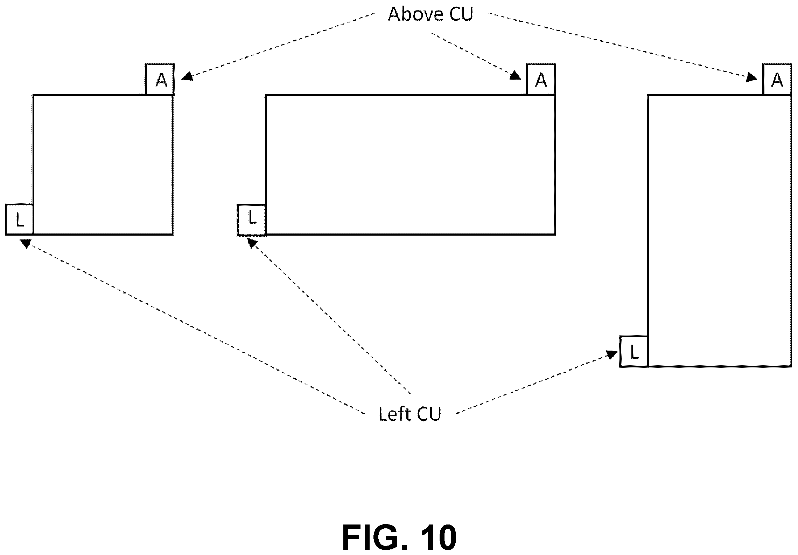

To minimize the number of signaling bits required for the prediction mode, e.g., for a Luma block, VVC uses a list of most probable modes (MPM). The 67 intra prediction modes are thus divided into two sets (a.k.a. lists), i.e., the set of (e.g., six) most probable modes and a remaining set of 61 modes, e.g., in increasing index order. In an example, the MPM list of (e.g., six) prediction modes (e.g., most probable prediction modes) is constructed using the prediction modes of the left and the top neighbor blocks of the target block and their adjacent modes at ∓1 or ∓2 offsets, and possibly some default modes like PLANAR (mode 0), DC (mode 1), vertical (VER_IDX, or mode 50), and horizontal (HOR_IDX or mode 18) modes. The top and left neighbor blocks (e.g., top and left neighbor CUs) are at the right and bottom edge of the target block, respectively, as shown in **FIG. 10.** A flag, e.g., *mpmFlag,* is signaled that indicates whether the intra prediction mode of the target block is in MPM list (e.g., set) or in the remaining set. In an example, if the prediction mode of the target block belongs to the MPM list, then the flag (*mpmFlag*) is encoded (decoded respectively) as '1' and the index of the candidate mode in the MPM list is encoded (decoded respectively), e.g., using a variable length code. Otherwise (the prediction mode of the target block belongs to the remaining list), the *mpmFlag* is encoded (decoded respectively) as '0' and the index of the prediction mode in the set of remaining 61 modes is encoded (decoded respectively), e.g., using a truncated binary code of 5 or 6 bits.

If either of the neighbor CUs is unavailable or belongs to an Inter-slice, then its mode is initialized as the PLANAR mode. The default modes used for constructing the list are the PLANAR mode, the DC mode, the directly vertical mode VER_IDX (index = 50), and the directly horizontal mode HOR_IDX (index = 18).

In VVC, the MPM list is constructed as follows, wherein L is the prediction mode of the left CU (value in range [0 - 66]) and A is the prediction mode of the above CU (value in range [0 - 66]).

maxCandVal is set to max(L,A), minCandVal is set to min(L,A) and numCand is set to 1 if L=A and numCand is set to 2 otherwise.

$$MPM[0] = PLANAR\_IDX;$$

if maxCandVal < 2 (neither L nor A is angular):

$$MPM[1] = DC\_IDX$$

$$MPM[2] = VER\_IDX$$

MPM[3] = HOR_IDX

MPM[4] = VER_IDX - 4

MPM[5] = VER_IDX + 4

Else if numCand = 1 (i.e., L=A= an angular mode) OR minCandVal < 2 (only one between L or A is angular):

MPM[1] = maxCandVal

MPM[2] = wrap(maxCandVal – 1)

MPM[3] = wrap(maxCandVal + 1)

MPM[4] = wrap(maxCandVal – 2);

MPM[5] = wrap(maxCandVal + 2)

Else

MPM[1] = L

MPM[2] = A

If maxCandVal – minCandVal = 1:

MPM[3] = wrap(minCandVal – 1)

MPM[4] = wrap(maxCandVal + 1);

MPM[5] = wrap(minCandVal – 2)

Else if maxCandVal – minCandVal >= 62:

MPM[3] = wrap(minCandVal + 1)

MPM[4] = wrap(maxCandVal – 1);

MPM[5] = wrap(minCandVal + 2)

Else if maxCandVal – minCandVal = 2:

MPM[3] = wrap(minCandVal + 1)

MPM[4] = wrap(minCandVal – 1);

MPM[5] = wrap(maxCandVal + 1)

Else:

MPM[3] = wrap(minCandVal – 1)

$$MPM[4] = \mathrm{wrap}(minCandVal + 1);$$

$$MPM[5] = \mathrm{wrap}(maxCandVal - 1)$$

The wrap() function circularly wraps the derived modes to the range of angular modes [2-66] and is defined as follows: wrap(m)= (m + 62) % 64 + 2; where % is the modulus operator.

In ECM, two MPM lists are generated instead of one, i.e., a primary MPM list and a secondary MPM list. The primary MPM (PMPM) list contains 6 entries, while the secondary MPM (SMPM) list contains 16 entries. A generic MPM list with 22 entries is thus built by sequentially adding (i.e. inserting or placing) candidate intra prediction mode indices, from the one most likely to be selected for predicting the current CU to the least likely one.

The primary and secondary MPM lists are constructed using the adjacent and non-adjacent prediction modes, the DIMD mode and the first DIMD blend mode, modes at ($\pm 1$, $\pm 2$, $\pm 3$, $\pm 4$) offsets to already included angular modes, and a default list of 22 modes.

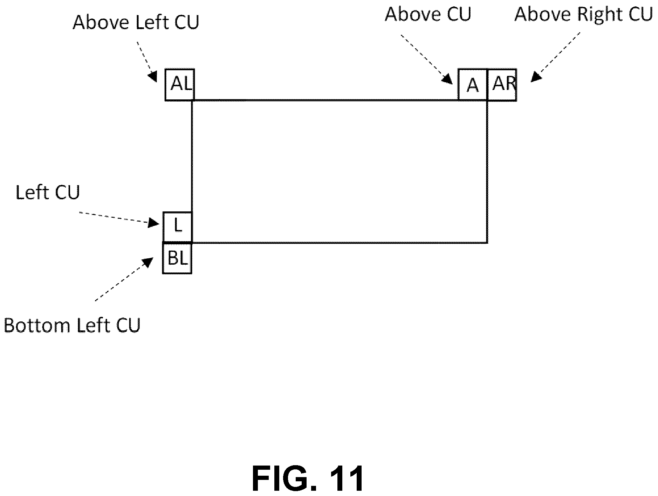

The first mode is always initialized to the PLANAR mode, which is indexed as PLANAR_IDX or 0. Then, the modes of the five neighboring blocks adjacent to the target block are included in the list, e.g., after checking for repetitions. The neighboring blocks adjacent to the target block are illustrated on **FIG. 11.** Then, the DIMD (Decoder-side intra mode derivation) mode and the first DIMD blend mode are included in the list, e.g., after checking for repetitions. Then, some non-adjacent neighbor modes on the left, top, and top - left sides of the block are checked for inclusion in the list, e.g., after checking for repetitions. If the number of non-planar modes (i.e., excluding the first mode in the list) is greater than 5, they are sorted after predicting a template as used in Template Based Intra Mode Derivation and Fusion (TIMD). The modes are sorted in increasing order of SATD (sum of absolute transformed differences) score resulting from the template prediction with the corresponding modes. If the total number of non-planar modes is still less than 21, angular modes at delta offsets $\pm 1$ to $\pm 4$ of already included angular modes are added to the list. If the list size is still less than 21, some modes from a default list of 21 distinct modes are added to the list to make the total number of non-planar modes equal to 21. The default list is defined as follows in ECM : {DC_IDX, VER_IDX, HOR_IDX, VER_IDX - 4, VER_IDX + 4, 14, 22, 42, 58, 10, 26, 38, 62, 6, 30, 34, 66, 2, 48, 52, 16}. In ECM, DC_IDX=1, VER_IDX=50 and HOR IDX=18. HOR stands for Horizontal, VER for Vertical and IDX for index. The primary MPM list is constructed using the PLANAR mode as the first candidate and the first 5 candidates in the shortlist, i.e., a list of selected candidates from which a final choice is made. Then the remaining 16 modes in the shortlist constitute the secondary MPM list.

In a case where the mode belongs to the primary MPM list, its encoding (decoding respectively) is identical to what was described above with respect to VVC. The encoder checks the secondary list (only) if a candidate mode to be encoded (decoded respectively) does not belong to the primary list. To this aim, a secondary mpm flag, denoted *smpm_flag*, is encoded (decoded respectively) to signal if the mode belongs to the secondary list or not. In a case where the mode belongs to the secondary list, the secondary flag *smpm_flag* is encoded as '1' and the index of the mode is variable-length encoded (decoded respectively). Otherwise (i.e., the mode does not belong to the secondary list), the secondary flag *smpm_flag* is encoded (decoded respectively) as '0' and the index of the prediction mode in the set of remaining 45 modes is encoded (decoded respectively) using a truncated binary code.

As depicted on FIG. 5, in perspective intra prediction, a target block is predicted using a perspective point. The perspective point is chosen on a straight line along a direction at an offset distance from a block depending on the dimensions of the block (FIG. 5). Since the perspective points are associated with directional prediction modes, a directional prediction can be either in normal mode as in VVC, ECM, etc., or in perspective mode. To decode if the prediction of a block is in perspective mode, it is necessary for the encoder to signal the information. However, signaling will increase the side information and may lead to inefficient compression performance unless the perspective prediction improves on the normal unidirectional prediction relatively. When perspective prediction is allowed with the most probable modes, it may not be right to allow perspective prediction with all MPMs considering the tradeoff between added signaling for perspective prediction and prediction accuracy. Furthermore, as the perspective prediction is applied only with angular modes, it may be wasteful to use signaling bits for perspective prediction when an MPM is non-angular.

Indeed, modes in the MPM list may not all have equal likelihood of being used for perspective prediction. Therefore, a list (a set) of most probable perspective modes is proposed that aims at improving the rate-distortion performance by allowing only the most likely MPM modes for perspective prediction. A most probable perspective mode (MPPM) is a mode in the MPM list that can be used for perspective prediction in addition to the normal prediction.

Based on the derivation of the list of most probable modes, a list of most probable perspective modes is derived as a list of (e.g., six) elements where the elements are either 0 or 1. A value of 1 indicates that the corresponding MPM can be used for both normal and perspective predictions. Similarly, a value of 0 indicates that the corresponding MPM can be used only for normal prediction, but not for perspective prediction. The perspective prediction is defined only for angular modes by definition. The MPPM list is constructed so that L and/or A prediction modes are set a value 1 (usable for both normal and perspective predictions) only in a case where they are angular modes. In addition, some other derived MPM modes, which are angular modes around L and/or A within $\pm 1$ or $\pm 2$ offsets may also be set a value of 1, e.g., depending on whether L and A prediction modes have close angular directions.

In the context of VVC MPM list, an example of a MPPM list is given below. Mppm[0] is set (initialized) to zero as the first MPM mode, MPM[0], corresponds to the PLANAR mode, which is not an angular mode that can be used for perspective prediction.

$$\text{If } maxCandVal < 2:$$

$$Mppm[1] = 0;$$

$$Mppm[2] = 0;$$

$$Mppm[3] = 0;$$

$$Mppm[4] = 0;$$

$$Mppm[5] = 0;$$

$$\text{Else if } numCand = 1 \text{ OR } minCandVal < 2:$$

$$Mppm[1] = 1;$$

$$Mppm[2] = 1;$$

$$Mppm[3] = 1;$$

$$Mppm[4] = 0;$$

$$Mppm[5] = 0;$$

$$\text{Else:}$$

$$Mppm[1] = 1;$$

$$Mppm[2] = 1;$$

$$\text{If } maxCandVal - minCandVal = 1:$$

$$Mppm[3] = 1;$$

$$Mppm[4] = 1;$$

$$Mppm[5] = 0;$$

$$\text{Else if } maxCandVal - minCandVal >= 62:$$

$$Mppm[3] = 1;$$

$$Mppm[4] = 0;$$

$$Mppm[5] = 0;$$

$$\text{Else if } maxCandVal - minCandVal = 2:$$

$$Mppm[3] = 1;$$

$$Mppm[4] = 0;$$

$$Mppm[5] = 0;$$

$$\text{Else:}$$

$$Mppm[3] = 0;$$

$$Mppm[4] = 0;$$

$$Mppm[5] = 0;$$

In ECM, the MPPM can be defined in the same manner, e.g., using only the elements in the primary MPM list.

In another example, the MPPM modes can be the first few directional modes (i.e., the first few angular modes) in the MPM list. For example, the first 2 or 3 non-planar modes can be used as MPPM modes.

The motivation behind the definition of MPPMs is not to enable all MPMs for perspective prediction, but only the ones having the highest probability. Therefore, the signaling required for perspective prediction can be decreased and thus may result in better tradeoff between the prediction accuracy and additional signaling. When an MPM is also an MPPM, the encoder may predict a current block using both normal prediction and perspective prediction. If either of them results in the best rate-distortion performance, the encoder signals it accordingly with a (e.g., 1-bit) perspective flag.

For example, in VVC, if the prediction mode belongs to the MPM list, the encoder first encodes the *mpmFlag* as 1 followed by the MPM index, denoted *mpm_idx*. Then, if (only if) the mode is also an MPPM (e.g., MPPM[*mpm_idx*]==1), then it encodes a *perspectiveFlag*.

On the decoding side, the decoder first decodes the *mpmFlag*. If the value is 1, then it decodes the MPM index *mpm_idx* and then decodes the *perspectiveFlag* if (only if) the mode is an MPPM (e.g., MPPM[*mpm_idx*]==1). Depending on the decoded value of the *perspectiveFlag*, it decides to perform normal prediction or perspective prediction with the decoded prediction mode.

Therefore, some signaling bits are saved since the *perspectiveFlag* is not always signaled, e.g., it is not signaled in a case where the prediction mode is not identified as being an MPPM.

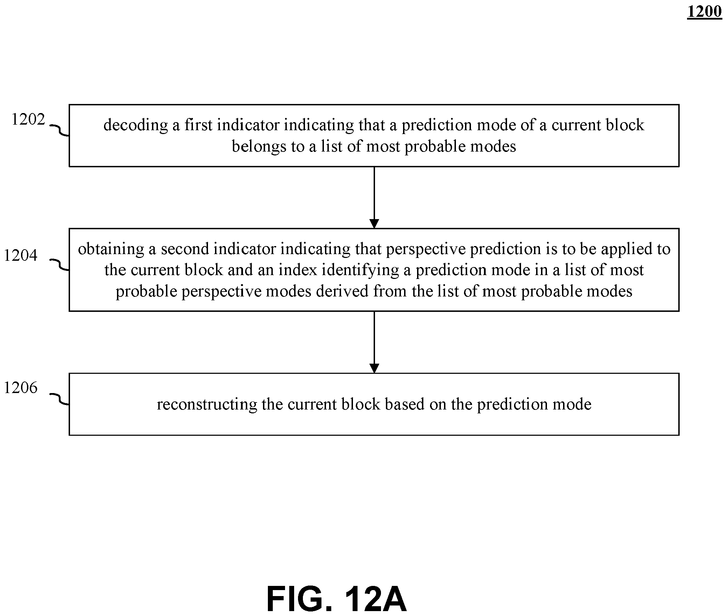

**FIG. 12A** is a block diagram illustrating a decoding method 1200, e.g., at a receiver side, according to one or more embodiments.

A first indicator such as a flag (e.g., *mpmFlag*) is decoded (1202). The first flag indicates whether a prediction mode of a current block belongs to a list of most probable modes. In an example, the first indicator is equal to 1 to indicate that the prediction mode of the current block belongs to the list of most probable modes and the first indicator is equal to zero otherwise.

A second indicator (e.g., *perspectiveFlag*) is obtained (1204). The second indicator (e.g., a flag) indicates whether perspective prediction is to be applied to the current block. An index identifying a prediction mode in a list of most probable perspective modes derived from the list of most probable modes is also obtained (1204). The list of most probable perspective modes (MPPM) is derived as mentioned above, e.g., the MPPM can be the first few directional modes (i.e., the first few angular modes) in the MPM list. For example, the first 2 or 3 non-planar modes can be used as MPPM modes.

The current block is reconstructed (1206), e.g., using perspective prediction, based on the prediction mode.

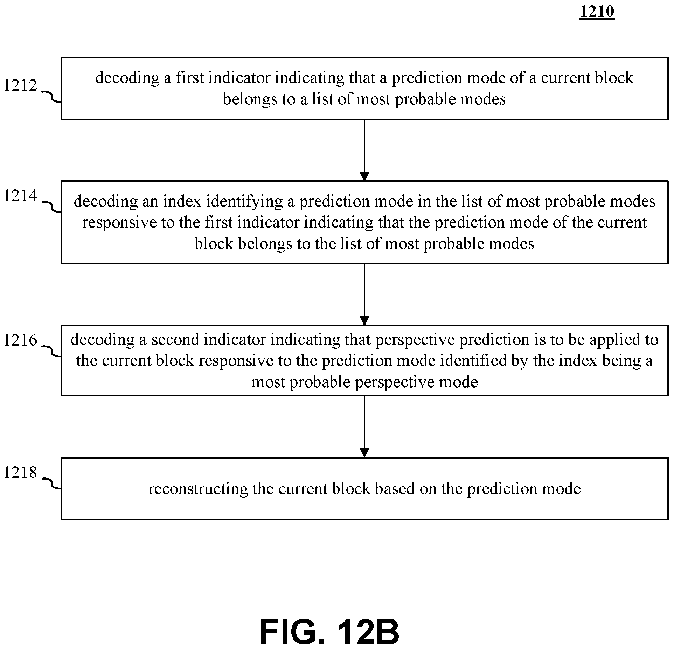

**FIG. 12B** is a block diagram illustrating a decoding method 1210, e.g., at a receiver side, according to one or more embodiments.

A first indicator such as a flag (e.g., *mpmFlag*) is decoded (1212). The first flag indicates whether a prediction mode of a current block belongs to a list of most probable modes. In an example, the first indicator is equal to 1 to indicate that the prediction mode of the current block belongs to the list of most probable modes and the first indicator is equal zero otherwise.

An index *mpm_idx* (e.g., MPM index) is decoded (1214) responsive to the flag (e.g., *mpmFlag*) indicating the prediction mode of the current block belongs to the list of most probable modes. The index identifies a prediction mode in the list of most probable modes.

A second indicator (e.g., *perspectiveFlag*) is decoded (1216) responsive to the prediction mode identified by the index being (also) a most probable perspective mode. The second indicator (e.g., a flag) indicates whether perspective prediction is to be applied to the current block. Said otherwise, the second indicator is only decoded in a case where the prediction mode identified by the index is also a most probable perspective mode.

The current block is reconstructed (1218) based on the prediction mode and the second indicator if/when decoded. Depending on the decoded value of the second indicator, normal prediction or perspective prediction with the decoded prediction mode is performed. Perspective prediction is for example performed as illustrated by FIGs 5-9. Normal prediction is also performed in a case where no second indicator is decoded, e.g., because the prediction mode identified by the index is not a most probable perspective mode.

To determine that the prediction mode identified by the index is (e.g., is also) a most probable perspective mode, a list of most probable perspective modes may be checked. The list of most probable perspective modes identifies for each most probable mode of the list of most probable modes whether it is also a most probable perspective mode. The list is, for example, the MPPM list mentioned above that associates a value 1 to a mode being also a most probable perspective mode and a 0 otherwise. In such a case, determining that the prediction mode identified by the index is (e.g., is also) a most probable perspective mode comprises determining that MPPM[*mpm_idx*] is equal to 1.

The MPPM list is constructed the same way on the decoder and encoder sides and is thus not signaled. In an example, the list of most probable perspective modes identifies only first two or three angular modes of the list of most probable modes (i.e., MPM list) as being also a most probable perspective mode.

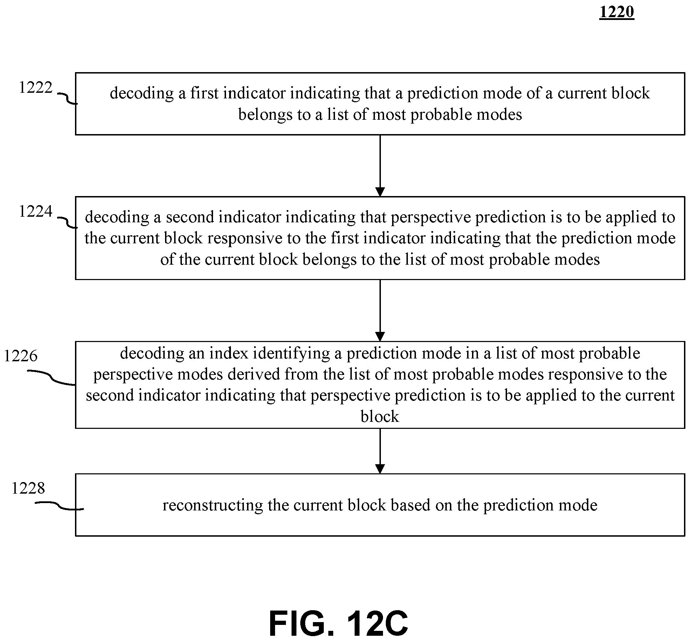

**FIG. 12C** is a block diagram illustrating a decoding method 1220, e.g., at a receiver side, according to one or more embodiments.

The first indicator (*mpmFlag*) *is* decoded (1222) in the usual manner, i.e., as in 1202. If the decoded value is 1 (i.e., the first indicator indicates that the prediction mode of the current block belongs to the list of most probable modes), the second indicator (*perspectiveFlag)* is decoded (1224). If the decoded value of the *perspectiveFlag* is 0 (indicating that perspective prediction is not applied to the current block), the index (mode index) *mpm_idx* (e.g., MPM index) is decoded in the same manner as before. Else, if the decoded value of the *perspectiveFlag* is 1 (indicating that perspective prediction is to be applied to the current block), the (mode) index (*mpm_idx*) is decoded (1226), e.g., using a new coding scheme that considers only the angular modes with value 1 in the MPPM list. The index identifies a prediction mode in the list of most probable perspective modes derived from the list of most probable modes. For example, if only the first two angular modes in the MPM list are enabled for perspective prediction, then only 1 bit is required to signal the *mpm_idx.* Or, if three angular modes are enabled for perspective prediction, then a variable length coding scheme of '0', '10' and '11' can be assigned to the three candidate modes in the order of their indices in the MPM list.

The current block is reconstructed (1228) based on the prediction mode and the second indicator if/when decoded. Depending on the decoded value of the second indicator, normal prediction or perspective prediction with the decoded prediction mode is performed.

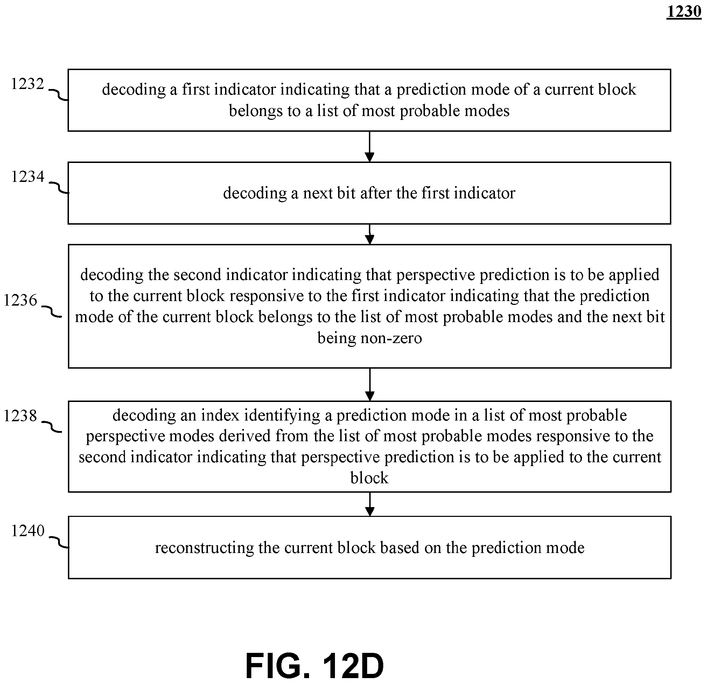

**FIG. 12D** is a block diagram illustrating a decoding method 1230, e.g., at a receiver side, according to one or more embodiments.

The first indicator (*mpmFlag*) is decoded (1232) in the usual manner, i.e., as in 1202. If the decoded value is 1, a next one bit is decoded (1234). If the decoded value is 0, then the (mode) index is 0, and the PLANAR mode is the prediction mode. Else, the *perspectiveFlag* is decoded (1236) followed by the (mode) index *mpm_idx* (1238). The decoding of the *mpm_idx* depends on the decoded value of the *perspectiveFlag,* as explained before with reference to FIG. 12C.

The current block is reconstructed (1240) based on the prediction mode and the second indicator if/when decoded. Depending on the decoded value of the second indicator, normal prediction or perspective prediction with the decoded prediction mode is performed.

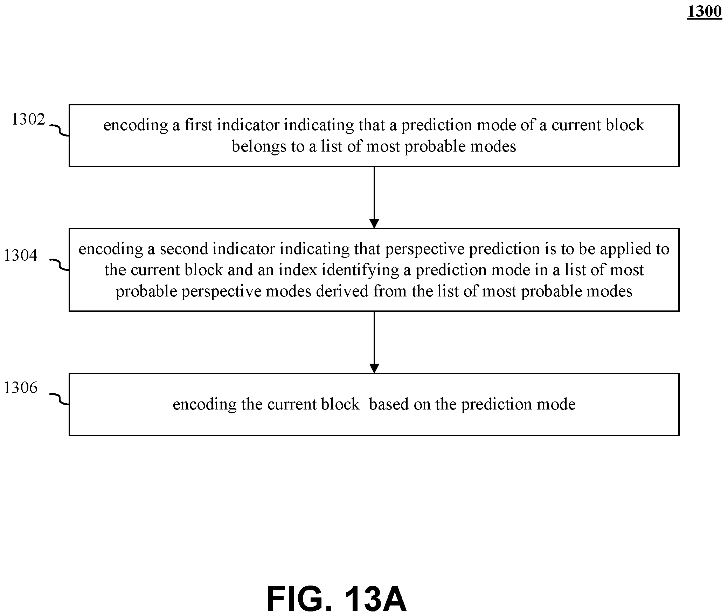

**FIG. 13A** is a block diagram illustrating an encoding method 1300 according to one or more embodiments.

A first indicator such as a flag (e.g., *mpmFlag*) is encoded (1302). The first flag indicates whether a prediction mode of a current block belongs to a list of most probable modes. In an example, the first indicator is equal to 1 to indicate that the prediction mode of the current block belongs to the list of most probable modes and the first indicator is equal to zero otherwise.

A second indicator (e.g., *perspectiveFlag*) is encoded (1304). The second indicator (e.g., a flag) indicates whether perspective prediction is to be applied to the current block. An index identifying a prediction mode in a list of most probable perspective modes derived from the list of most probable modes is also encoded (1304). The list of most probable perspective modes (MPPM) is derived as mentioned above, e.g., the MPPM can be the first few directional modes (i.e., the first few angular modes) in the MPM list. For example, the first 2 or 3 non-planar modes can be used as MPPM modes.

The current block is encoded (1306), e.g., using perspective prediction, based on the prediction mode.

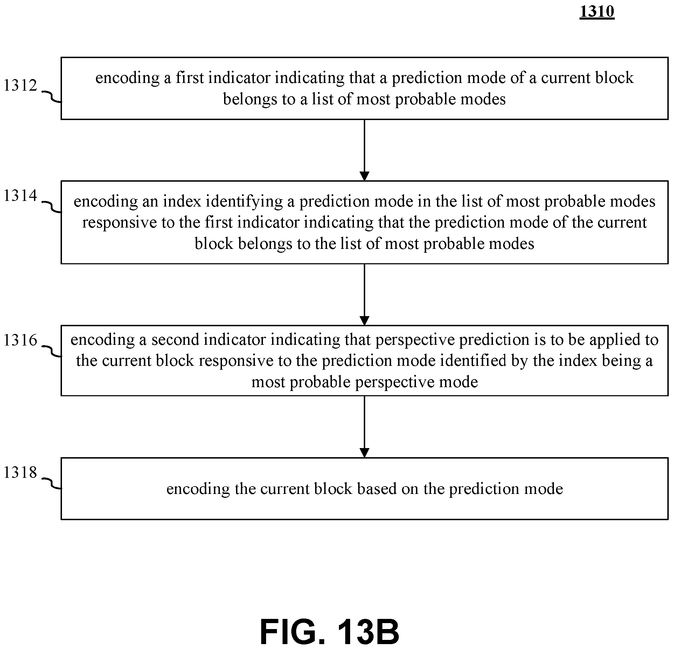

FIG. 13B is a block diagram illustrating an encoding method 1310 according to one or more embodiments.

A first indicator such as a flag (e.g., *mpmFlag*) is encoded (1312). The first flag indicates whether a prediction mode of a current block belongs to a list of most probable modes. In an example, the first indicator is equal to 1 to indicate that the prediction mode of the current block belongs to the list of most probable modes and the first indicator is equal zero otherwise.

An index *mpm_idx* (e.g., MPM index) is encoded (1314) responsive to the flag (e.g., *mpmFlag*) indicating the prediction mode of the current block belongs to the list of most probable modes. The index identifies a prediction mode in the list of most probable modes.

A second indicator (e.g., *perspectiveFlag*) is encoded (1316) responsive to the prediction mode identified by the index being (also) a most probable perspective mode. The second indicator (e.g., a flag) indicates whether perspective prediction is to be applied to the current block. Said otherwise, the second indicator is only obtained in a case where the prediction mode identified by the index is also a most probable perspective mode.

The current block is encoded (1318) based on the prediction mode and the second indicator if encoded. Depending on the decoded value of the second indicator, normal prediction or perspective prediction with the prediction mode is performed. Perspective prediction is for example performed as illustrated by FIGs 5-9. Normal prediction is also performed in a case where no second indicator is encoded, e.g., because the prediction mode identified by the index is not a most probable perspective mode.

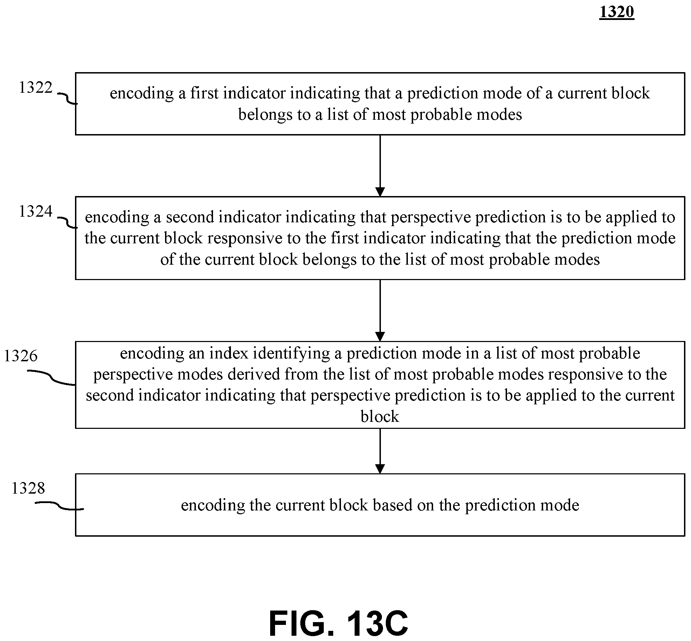

FIG. 13C is a block diagram illustrating an encoding method 1320 according to one or more embodiments.

A first indicator such as a flag (e.g., *mpmFlag*) is encoded (1322). If the *mpmFlag* value is 1 (i.e., the first indicator indicates that the prediction mode of the current block belongs to the list of most probable modes), the second indicator (*perspectiveFlag)* is encoded (1324) after the first indicator (*mpmFlag*) but before encoding the (mode) index *mpm_idx*. If the *perspectiveFlag* value is 0, then the encoding of the (mode) index *mpm_idx* remains the same as before. Else (i.e., perspective prediction is to be applied), the (mode) index (*mpm_idx*) is encoded (1326), e.g., using the new coding scheme that considers only the angular modes with value 1 in the MPPM list. The index identifies a prediction mode in the list of most probable perspective modes derived from the list of most probable modes. For example, if only the first two angular modes in the MPM list are enabled for perspective prediction, then only 1 bit is required to signal the *mpm_idx*. Or, if three angular modes are enabled for perspective prediction, then a variable length coding scheme of '0', '10' and '11' can be assigned to the three candidate modes in the order of their indices in the MPM list. The current block is encoded (1328) based on the prediction mode and the second indicator if encoded. Depending on the decoded value of the second indicator, normal prediction or perspective prediction with the prediction mode is performed.

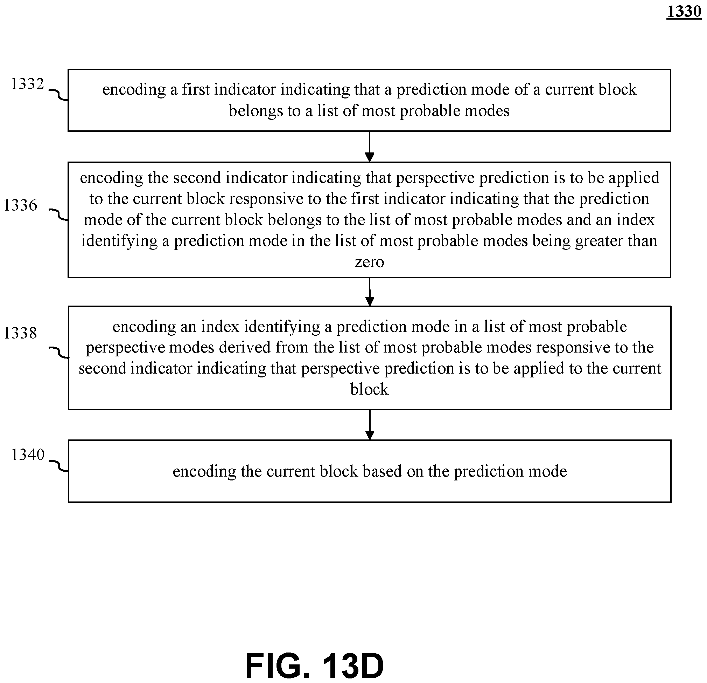

FIG. 13D is a block diagram illustrating an encoding method 1330 according to one or more embodiments.

A first indicator such as a flag (e.g., *mpmFlag*) is encoded (1332).

Since the PLANAR mode has the highest probability of occurrence in a frame of a sequence, the above signaling method may be inefficient as the encoder still encodes the second indicator (*perspectiveFlag)* with value 0 whenever the prediction mode is the PLANAR mode. A better signaling method may be obtained where the encoder signals the *perspectiveFlag* after the signaling of the first candidate mode index. In other words, the *perspectiveFlag* is encoded if/when the first indicator (*mpmFlag*) is 1 (the first indicator indicates that the prediction mode of the current block belongs to the list of most probable modes) and the (mode) index is greater than 0, e.g., which is known from the first bin (e.g., bit). If the first bin value is 0, then *mpm_idx* is equal to 0, meaning that the mode is the PLANAR mode. If the first bin value is 1, meaning that the (mode) index is greater than 0, the *perspectiveFlag* is encoded (1336). Then, the (mode) index *mpm_*idx is encoded depending on the *perspectiveFlag* value, as explained before with respect to FIG. 13B. That is, if *perspectiveFlag* is equal to 0, then the *mpm_idx* is encoded without considering the MPPM list.

Else, the (candidate/mode) index (*mpm_idx*) is encoded (1338), e.g., using the new coding scheme that considers only the angular modes with value 1 in the MPPM list. The index identifies a prediction mode in the list of most probable perspective modes derived from the list of most probable modes.

The current block is encoded (1340) based on the prediction mode and the second indicator if encoded. Depending on the decoded value of the second indicator, normal prediction or perspective prediction with the prediction mode is performed.

The various examples described with respect to the decoding method apply in the same way to the encoding method.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.

> ii. A bitstream that includes one or more of the described syntax elements, or variations thereof, whether transmitted, stored, or otherwise made available.

> iii. Creating, transmitting, receiving, and/or decoding of the bitstream.

> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.   A method comprising:

decoding a first indicator indicating that a prediction mode of a current block belongs to a list of most probable modes;
obtaining a second indicator indicating that perspective prediction is to be applied to the current block and an index identifying a prediction mode in a list of most probable perspective modes derived from the list of most probable modes; and
reconstructing the current block based on the prediction mode.

2.   The method of claim 1, wherein obtaining the second indicator indicating that perspective prediction is to be applied to the current block and the index identifying the prediction mode in the list of most probable perspective modes comprises:

decoding the second indicator indicating that perspective prediction is to be applied to the current block responsive to the first indicator indicating that the prediction mode of the current block belongs to the list of most probable modes ; and
decoding the index identifying the prediction mode in the list of most probable perspective modes responsive to the second indicator indicating that perspective prediction is to be applied to the current block.

3. The method of claim 1, wherein obtaining the second indicator indicating that perspective prediction is to be applied to the current block and the index identifying the prediction mode in the list of most probable perspective modes comprises:

decoding a next bit after the first indicator;
decoding the second indicator indicating that perspective prediction is to be applied to the current block responsive to the first indicator indicating that the prediction mode of the current block belongs to the list of most probable modes and the next bit being non-zero ; and
decoding the index identifying the prediction mode in the list of most probable perspective modes responsive to the second indicator indicating that perspective prediction is to be applied to the current block.

4. The method of claim 1, wherein obtaining the second indicator indicating that perspective prediction is to be applied to the current block and the index identifying the prediction mode in the list of most probable perspective modes derived from the list of most probable mode comprises:

decoding an index identifying a prediction mode in the list of most probable modes responsive to the first indicator indicating that the prediction mode of the current block belongs to the list of most probable modes; and
decoding the second indicator indicating that perspective prediction is to be applied to the current block responsive to the prediction mode identified by the index being a most probable perspective mode.

5. The method of claim 4, wherein decoding the second indicator indicating that perspective prediction is to be applied to the current block responsive to the prediction mode identified by the index being a most probable perspective mode comprises:

determining that the prediction mode identified by the index is a most probable perspective mode; and
decoding the second indicator indicating that perspective prediction is to be applied to the current block responsive to the determining.

6. The method of claim 5, wherein determining that the prediction mode identified by the index is a most probable perspective mode comprises checking a list of most probable perspective modes, said list of most probable perspective modes identifying for each most probable mode of the list of most probable modes whether it is also a most probable perspective mode.

7. The method of claim 6, wherein the list of most probable perspective modes identifies only first two or three angular modes of the list of most probable modes as being also a most probable perspective mode.

8. A method comprising:

encoding a first indicator indicating that a prediction mode of a current block belongs to a list of most probable modes;
encoding a second indicator indicating that perspective prediction is to be applied to the current block and an index identifying a prediction mode in a list of most probable perspective modes derived from the list of most probable modes; and
encoding the current block based on the prediction mode.

9. The method of claim 8, wherein encoding the second indicator indicating that perspective prediction is to be applied to the current block and the index identifying the prediction mode in the list of most probable perspective modes comprises :

encoding the second indicator indicating that perspective prediction is to be applied to the current block responsive to the first indicator indicating that the prediction mode of the current block belongs to the list of most probable modes ; and
encoding the index identifying the prediction mode in the list of most probable perspective modes responsive to the second indicator indicating that perspective prediction is to be applied to the current block.

10. The method of claim 8, wherein encoding the second indicator indicating that perspective prediction is to be applied to the current block and the index identifying the prediction mode in the list of most probable perspective modes comprises :

encoding the second indicator indicating that perspective prediction is to be applied to the current block responsive to the first indicator indicating that the prediction mode of the current block belongs to the list of most probable modes and an index identifying a prediction mode in the list of most probable modes being greater than zero; and
encoding an index identifying a prediction mode in a list of most probable perspective modes derived from the list of most probable modes responsive to the second indicator indicating that perspective prediction is to be applied to the current block.

11. The method of claim 8, wherein encoding the second indicator indicating that perspective prediction is to be applied to the current block and the index identifying the prediction mode in the list of most probable perspective modes comprises :

encoding an index identifying a prediction mode in the list of most probable modes responsive to the first indicator indicating the prediction mode of the current block belongs to the list of most probable modes; and
encoding the second indicator indicating that perspective prediction is to be applied to the current block responsive to the prediction mode identified by the index being a most probable perspective mode.

12. A decoding apparatus comprising one or more processors and at least one memory coupled to said one or more processors, wherein said one or more processors are configured to perform:

decoding a first indicator indicating that a prediction mode of a current block belongs to a list of most probable modes;
obtaining a second indicator indicating that perspective prediction is to be applied to the current block and an index identifying a prediction mode in a list of most probable perspective modes derived from the list of most probable modes; and
reconstructing the current block based on the prediction mode.

13. An encoding apparatus comprising one or more processors and at least one memory coupled to said one or more processors, wherein said one or more processors are configured to perform:

encoding a first indicator indicating that a prediction mode of a current block belongs to a list of most probable modes;
encoding a second indicator indicating that perspective prediction is to be applied to the current block and an index identifying a prediction mode in a list of most probable perspective modes derived from the list of most probable modes; and
encoding the current block based on the prediction mode.

14. A computer readable storage medium having stored thereon instructions for implementing the method of any one of claims 1-11.

15. A signal comprising a bitstream, formed by performing the method of any one of claims 8 to 11.

**FIG. 1**

EP 4 773 599 A1

FIG. 2

FIG. 3

EP 4 773 599 A1

**FIG. 4**

FIG. 5

FIG. 6

FIG. 7

FIG. 8

EP 4 773 599 A1

**FIG. 9**

EP 4 773 599 A1

FIG. 10

FIG. 11

FIG. 12A

EP 4 773 599 A1

**1210**

1212 — decoding a first indicator indicating that a prediction mode of a current block belongs to a list of most probable modes

1214 — decoding an index identifying a prediction mode in the list of most probable modes responsive to the first indicator indicating that the prediction mode of the current block belongs to the list of most probable modes

1216 — decoding a second indicator indicating that perspective prediction is to be applied to the current block responsive to the prediction mode identified by the index being a most probable perspective mode

1218 — reconstructing the current block based on the prediction mode

# FIG. 12B

<u>1220</u>

1222 — decoding a first indicator indicating that a prediction mode of a current block belongs to a list of most probable modes

1224 — decoding a second indicator indicating that perspective prediction is to be applied to the current block responsive to the first indicator indicating that the prediction mode of the current block belongs to the list of most probable modes

1226 — decoding an index identifying a prediction mode in a list of most probable perspective modes derived from the list of most probable modes responsive to the second indicator indicating that perspective prediction is to be applied to the current block

1228 — reconstructing the current block based on the prediction mode

# FIG. 12C

EP 4 773 599 A1

EP 4 773 599 A1

**1230**

1232 — decoding a first indicator indicating that a prediction mode of a current block belongs to a list of most probable modes

1234 — decoding a next bit after the first indicator

1236 — decoding the second indicator indicating that perspective prediction is to be applied to the current block responsive to the first indicator indicating that the prediction mode of the current block belongs to the list of most probable modes and the next bit being non-zero

1238 — decoding an index identifying a prediction mode in a list of most probable perspective modes derived from the list of most probable modes responsive to the second indicator indicating that perspective prediction is to be applied to the current block

1240 — reconstructing the current block based on the prediction mode

# FIG. 12D

1302 — encoding a first indicator indicating that a prediction mode of a current block belongs to a list of most probable modes

1304 — encoding a second indicator indicating that perspective prediction is to be applied to the current block and an index identifying a prediction mode in a list of most probable perspective modes derived from the list of most probable modes

1306 — encoding the current block based on the prediction mode

# FIG. 13A

EP 4 773 599 A1

EP 4 773 599 A1

<u>1310</u>

1312 — encoding a first indicator indicating that a prediction mode of a current block belongs to a list of most probable modes

1314 — encoding an index identifying a prediction mode in the list of most probable modes responsive to the first indicator indicating that the prediction mode of the current block belongs to the list of most probable modes

1316 — encoding a second indicator indicating that perspective prediction is to be applied to the current block responsive to the prediction mode identified by the index being a most probable perspective mode

1318 — encoding the current block based on the prediction mode

# FIG. 13B

1322 — encoding a first indicator indicating that a prediction mode of a current block belongs to a list of most probable modes

1324 — encoding a second indicator indicating that perspective prediction is to be applied to the current block responsive to the first indicator indicating that the prediction mode of the current block belongs to the list of most probable modes

1326 — encoding an index identifying a prediction mode in a list of most probable perspective modes derived from the list of most probable modes responsive to the second indicator indicating that perspective prediction is to be applied to the current block

1328 — encoding the current block based on the prediction mode

## FIG. 13C

```
┌─────────────────────────────────────────────────────────────────────────┐
│  encoding a first indicator indicating that a prediction mode of a         │
│  current block belongs to a list of most probable modes                    │
└─────────────────────────────────────────────────────────────────────────┘
```
1332

```
┌─────────────────────────────────────────────────────────────────────────┐
│  encoding the second indicator indicating that perspective prediction is   │
│  to be applied to the current block responsive to the first indicator      │
│  indicating that the prediction mode of the current block belongs to the   │
│  list of most probable modes and an index identifying a prediction mode    │
│  in the list of most probable modes being greater than zero                │
└─────────────────────────────────────────────────────────────────────────┘
```
1336

```
┌─────────────────────────────────────────────────────────────────────────┐
│  encoding an index identifying a prediction mode in a list of most         │
│  probable perspective modes derived from the list of most probable modes   │
│  responsive to the second indicator indicating that perspective prediction │
│  is to be applied to the current block                                     │
└─────────────────────────────────────────────────────────────────────────┘
```
1338

```
┌─────────────────────────────────────────────────────────────────────────┐
│  encoding the current block based on the prediction mode                   │
└─────────────────────────────────────────────────────────────────────────┘
```
1340

## FIG. 13D

EP 4 773 599 A1

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/107026 A1 (IKONIN SERGEY YURIEVICH [RU]) 2 April 2020 (2020-04-02) | 1-5,8-15 | INV. H04N19/105 |
| A | * paragraphs [0158] - [0179] * | 6,7 | H04N19/11 H04N19/176 |
| | ----- | | H04N19/593 |
| Y | BROSS B ET AL: "Versatile Video Coding Editorial Refinements on Draft 10", 20. JVET MEETING; 20201007 - 20201016; TELECONFERENCE; (THE JOINT VIDEO EXPLORATION TEAM OF ISO/IEC JTC1/SC29/WG11 AND ITU-T SG.16 ), , no. JVET-T2001 24 November 2020 (2020-11-24), XP030293334, Retrieved from the Internet: URL:https://jvet-experts.org/doc_end_user/documents/20_Teleconference/wg11/JVET-T2001-v2.zip JVET-T2001-v2.docx [retrieved on 2020-11-24] * section 8.4.2 (pp. 205 - 208) * | 1-5,8-15 | H04N19/70 |
| | ----- | | |
| A | FAN Z ET AL: "Non-EE2: Changes on TIMD and SGPM for reducing ECM decoder complexity", 31. JVET MEETING; 20230711 - 20230719; GENEVA; (THE JOINT VIDEO EXPLORATION TEAM OF ISO/IEC JTC1/SC29/WG11 AND ITU-T SG.16 ), , no. JVET-AE0056 4 July 2023 (2023-07-04), XP030311205, Retrieved from the Internet: URL:https://jvet-experts.org/doc_end_user/documents/31_Geneva/wg11/JVET-AE0056-v2.zip JVET-AE0056.pptx [retrieved on 2023-07-04] * the whole document * | 1-15 | |

**TECHNICAL FIELDS SEARCHED (IPC)**

H04N

-/--

The present search report has been drawn up for all claims

| Place of search | Date of completion of the search | Examiner |
|---|---|---|
| Munich | 5 June 2025 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 30 5010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/162724 A1 (GOOGLE LLC [US]) 19 August 2021 (2021-08-19) * paragraphs [0072] - [0094] * ----- | 1-15 | |

TECHNICAL FIELDS
SEARCHED       (IPC)

The present search report has been drawn up for all claims

| Place of search | Date of completion of the search | Examiner |
|---|---|---|
| Munich | 5 June 2025 | Hindelang, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.........................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 30 5010

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | Publication date | Patent family member(s) | | Publication date |
|---|---|---|---|---|
| US 2020107026 A1 | 02-04-2020 | CN | 111066322 A | 24-04-2020 |
| | | EP | 3639517 A1 | 22-04-2020 |
| | | US | 2020107026 A1 | 02-04-2020 |
| | | WO | 2018231087 A1 | 20-12-2018 |
| WO 2021162724 A1 | 19-08-2021 | CN | 115004703 A | 02-09-2022 |
| | | EP | 4074046 A1 | 19-10-2022 |
| | | EP | 4074047 A1 | 19-10-2022 |
| | | JP | 7480319 B2 | 09-05-2024 |
| | | JP | 2023514215 A | 05-04-2023 |
| | | JP | 2024087036 A | 28-06-2024 |
| | | US | 2023050660 A1 | 16-02-2023 |
| | | US | 2023058845 A1 | 23-02-2023 |
| | | WO | 2021162723 A1 | 19-08-2021 |
| | | WO | 2021162724 A1 | 19-08-2021 |

EPO FORM P0459

For more details about this annex : see Official Journal of the European Patent Office, No. 12/82